# EUROPEAN PATENT APPLICATION

(11) **EP 3 957 497 A1**
(43) Date of publication of application: **23.02.2022**
(21) Application number: 21191994.9
(22) Date of filing: 18.08.2021
(51) Int. Cl.: B60C 11/03, B60C 11/12, B60C 11/13

(54) **TIRE HAVING A TIRE TREAD WITH BRIDGE STRUCTURES AND POCKET STRUCTURES**

(30) Priority: 20.08.2020 US 202016997972
(71) Applicant: The Goodyear Tire & Rubber Company, Akron, Ohio 44316 (US)
(72) Inventor: PASSANTE SPACCAPIETRA, Ettore, L-9070 Ettelbruck (LU); MULLER, Philippe Joseph Auguste, B-6971 Champlon (BE); BORTOLET, Lionel Jean-Marie, F-54400 Longwy (FR); COCCON, Marco Nicolo, L-2230 Luxembourg (LU); NAWALE, Vaibhav, L-1220 Luxembourg (LU)
(74) Representative: Goodyear IP Law

(57) **Abstract**

A tire (1) is disclosed comprising an annular tread portion (100) including a circumferentially extending groove (101) having bridge structures (110) at circumferential intervals about the groove (101) and contoured pocket structures (120) therebetween. The pocket structures (120) have one or more curved transition surfaces (121) separating the bridge structures (110) from one or more curved base surfaces (122) of the pocket structures (120). The one or more curved transition surfaces (121) have a radius of curvature in a range of from 2.0 mm to 4.0 mm and the one or more curved base surfaces (122) have a radius of curvature in a range of from 4.0 mm to 8.0 mm.

## Description

### Field of the Invention

The present invention relates to a tire. More particularly, the present invention relates to a tire tread.

### Background of the Invention

In order to improve handling, tires are conventionally provided with grooves in their treads, wherein increased groove cross sections may increase the tire's drainage capacity. However, such grooves may negatively influence the tire's steering stability and grip. During cornering, grooves of tires may be subjected to buckling and tread portions laterally adjacent to these grooves may be raised from the road's surface such that they no longer contact the road.

This phenomenon may impair the adherence contact between the road and the tire tread and may result in a loss of control when making sudden maneuvers at high speed. Specifically, typical tire grooves may generate high stress concentrations in the adjacent tread and undergo buckling during frequent handling of a tire resulting in limited dry performances. Moreover, in wet conditions, the groove's cross-sectional area may be reduced, thereby impeding its drainage capacity.

A conventional asymmetric tread portion may be provided with circumferentially extending grooves having tilted/angled sidewalls. An outermost groove may have sidewall cross sections or profiles with different tilts in respect of a line perpendicular to the planar tread. Other grooves may have sidewall cross sections which are more tilted than the counterparts of the outermost groove. This arrangement is intended to maintain a safe cornering stability and also a low noise level. However, cornering stability may still be improved, especially at high speed on a vehicle having a non-zero, positive camber angle.

It is a continuing goal of tire makers to overcome one or more of the aforementioned disadvantages.

### Summary of the Invention

The invention relates of a tire in accordance with claim 1.

Dependent claims refer to preferred embodiments of the invention.

A tire in accordance with the present invention includes an annular tread portion with a circumferentially extending groove having bridge structures at circumferential intervals about the groove and contoured pockets therebetween. Each pocket has curved transition surfaces separating the bridge structures from curved base surfaces of the pocket. The curved transition surfaces have radii of curvature between 2.0 mm and 4.0 mm. The curved base surfaces have radii of curvature between 4.0 mm and 8.0 mm.

According to a preferred embodiment the curved transition surfaces have radii of curvature of about 3.0 mm.

According to another preferred embodiment, the curved base surfaces have radii of curvature of about 6.0 mm.

Preferably, the groove cross-section has a maximum width between 10.0 mm and 20.0 mm. such as 15.0 mm.

An example tire for use with the present invention may include an annular tread portion including a circumferentially extending groove having a circumferentially facing cross-section, the cross-section having an upper base radius between 5.0 mm and 15.0 mm along with a draft angle between 0.5° and 1.5°, a lower base radius between 2.0 mm and 8.0 mm, and along with a draft angle between 8.0° and 12.0°, and a transition radius between 0.1 mm and 0.9 mm. Preferably, the upper base radius is 10.0 mm. Preferably, the lower base radius is 5.0 mm. Preferably, the upper base radius has a draft angle of 1.0°. Preferably, the lower base radius has a draft angle 10.0°. Preferably, the transition radius is 0.5 mm.

The above aspects and features of this disclosure of the present invention may be combined with or replaced by one another.

### Definitions

"Axial" and "Axially" mean the lines or directions which are parallel to the axis of rotation of the tire.

"Camber angle" or "camber" means an angle between the equatorial plane of the tire and a line perpendicular to the road. This angle is positive when the upper portion of the tire is tilted outwardly when mounted to the vehicle, and negative when the upper portion of the tire is tilted inwardly.

"Circumferential" means lines or directions extending along or in parallel to the perimeter of the surface of the annular tread perpendicular to the axial direction.

"Cross section" means in the present application a cross section following or lying in a plane which extends along the axial direction and the radial direction of the tire. A "cross section" with regard to the tread or its components, as for instance its grooves, may also be considered as the profile of the tread or its components.

"Equatorial plane" means the plane perpendicular to the tire's axis of rotation and passing through the center of its tread; or the plane containing the circumferential centerline of the tread.

"Groove" means an elongated void area in a tread that may extend circumferentially. A groove width or depth may be equal to its average width or depth over its length.

"Inboard" means a direction axially oriented toward a center of the vehicle.

"Inner" means, if not otherwise defined, an inner axial direction.

"Lateral" means a direction parallel to the axial direction.

"Normal Load" means the specific design inflation pressure and load assigned by the appropriate standards organization for the service condition for the tire.

"Radial" and "radially" mean directions radially toward or away from the axis of rotation of the tire. In connection with "inner" or "outer" it refers to the tire axis.

"Slip angle" or "slip" means the angle between a rolling tire's direction of travel and the orientation of the equatorial plane of the tire.

"Tread" or "Tread portion" means one or more rubber components which when bonded to a tire carcass include that portion of the tire that comes into contact with the road when the tire is normally inflated and under normal load.

"Tread width" means the arc length of the tread surface in the plane including the axis of rotation of the tire.

### Brief Description of the Drawings

The structure, operation, and advantages of the present invention will become more apparent upon contemplation of the following description taken in conjunction with the accompanying drawings, wherein:
Figure 1 represents an example schematic perspective view of part of a tire tread in accordance with the present invention.
Figure 2 represents an example schematic cross-sectional view taken along line 2-2 in Figure 1.
Figure 3 represents an example schematic detail view of part of the tire tread of Figure 1.
Figure 4 represents an example schematic cross section through a tire tread with asymmetric grooves for use with the present invention;
Figure 5 represents an example schematic cross section of an outermost groove of the example tire tread of Figure 4;
Figure 6 represents an example schematic cross section of a middle groove of the example tire tread of Figure 4; and
Figure 7 schematically represents an example cross section of the tire tread of Figure 4 during a cornering maneuver.

### Detailed Description of Example Embodiments of the Invention

U.S. Patent Application Serial No. 16/989,923 to the present Applicant, filed August 11, 2020, is incorporated herein by reference in its entirety.

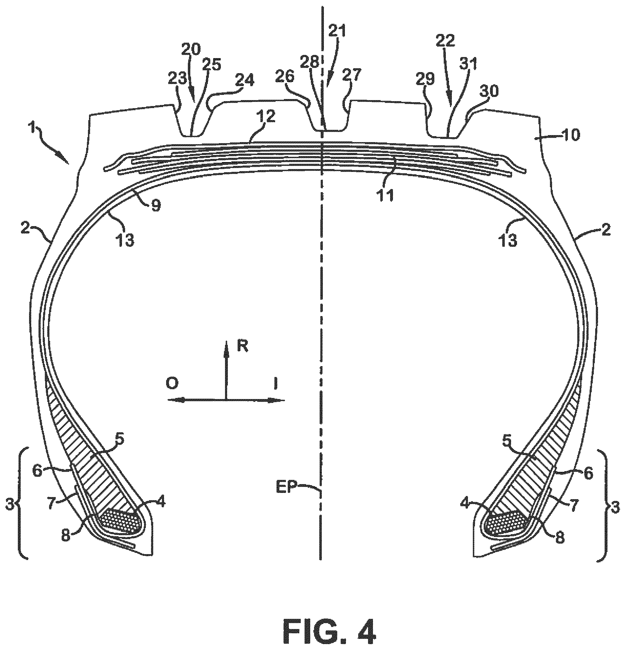

Figure 4 shows a schematic cross section of part of an example tire 1 for use with the present invention. The example tire 1 may be pneumatic or non-pneumatic. The example tire 1 has an example tread 10, an inner liner 13, a belt structure 12 comprising belts or belt plies 11, a carcass ply 9, two sidewalls 2, and two bead regions 3 comprising apexes 5 and bead cores 4. The example tire 1 is suitable, for example, for mounting on a rim of a vehicle, as e.g., a passenger car or truck. The depicted exemplary tire can be directional or not. Further, the example tire 1 may include a generally asymmetric or symmetric tread 10 in respect of the equatorial plane EP, with the example tread 10 extending between an inner sidewall 2 intended to be disposed at an inboard mounting position of a vehicle and an outer sidewall 2 intended to be disposed at an outboard mounting position of the vehicle. The carcass ply 9 may include a pair of axially opposite end portions 6, each of which is secured to a respective one of the bead cores 4. Each axial end portion 6 of the carcass ply 9 may be turned up and around each respective bead core 4 to a position sufficient to anchor each axial end portion 6 to the bead region 3. The carcass ply 9 may be a rubberized ply having a plurality of substantially parallel carcass reinforcing members made of such material as polyester, rayon, steel, carbon, fabric, titanium, and/or similar suitable materials. The turned-up portions 6 of the carcass ply 9 may engage the axial outer surfaces of two flippers 8 and axial inner surfaces of two chippers 7. The main portion of the example tread 10 may be formed of any suitable tread compound or compounds. The present invention is not limited to a tire design or material, as described above.

As shown in Figure 4, the example tread 10 preferably has three circumferentially extending main grooves 20, 21, 22, each groove generally defining a U-shaped opening in the tread 10. The main grooves 20, 21, 22 include an axially outermost or outboard groove 20, an axially innermost or inboard groove 22, and at least one middle groove 21 disposed between the outermost groove 20 and the innermost groove 22.

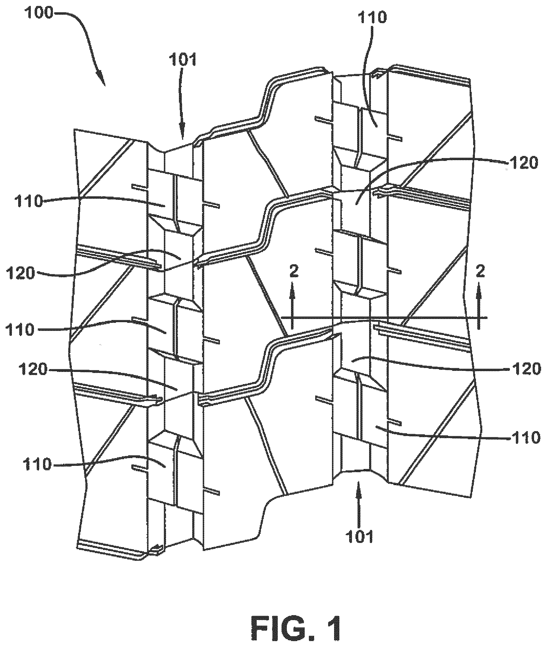

In Figure 1, the axially inner direction is indicated by the direction I, whereas the axially outer direction is indicated by the direction O. A radially outer direction is indicated by the direction R.

The tread 10 may also include auxiliary circumferentially extending grooves (not shown) which may be disposed between or beside the main grooves 20, 21, 22. The auxiliary grooves may generally be less wide and/or less deep than the main grooves 20, 21, 22. Each of the main grooves 20, 21, 22 may be at least twice as wide and/or at least twice as deep as each of the auxiliary grooves.

Each main groove 20, 21, 22 comprises a cross section with a groove bottom or base 25, 28, 31 laterally separating a pair of essentially radially extending sidewalls 23, 24, 26, 27, 29, 30, and a groove opening essentially radially opposite to the groove bottom 25, 28, 31. The groove opening may be considered as lying in a plane of the tread's surface which contacts the ground when rolling. Alternatively, the groove opening's cross section or profile may be considered as a straight line extending between the radially outer surfaces of two circumferential ribs forming the sidewalls of, or delimiting, the respective groove 20, 21, 22. Each sidewall 23, 24, 26, 27, 29, 30 may extend over the majority of the groove's depth and the main grooves 20, 21, 22 may generally increase their width in a radially outer direction R.

The groove bottom 25, 28, 31 may extend axially over the majority of the maximum width of the corresponding groove 20, 21, 22. However, in other examples, a groove bottom may be optional. For example, the sidewalls of a groove may laterally meet in just one point in cross section or in one circumferential line.

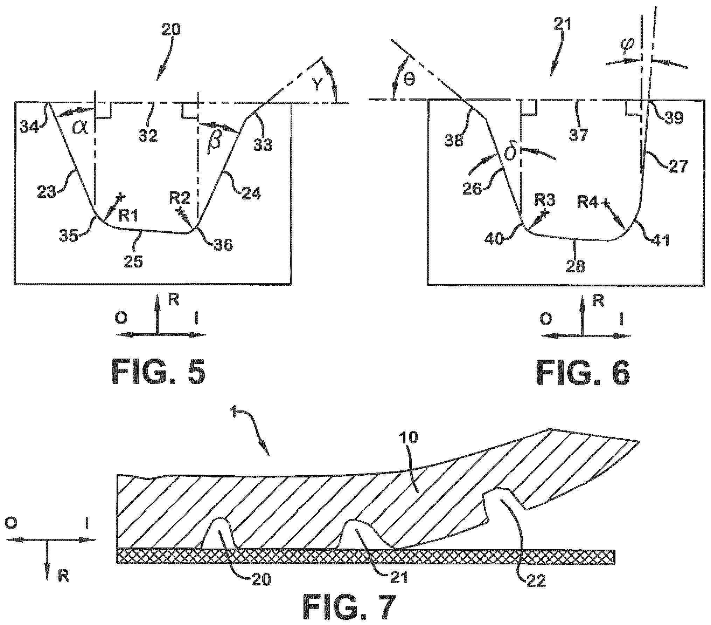

Figure 5 represents a schematic cross section of the outermost groove 20 of the example tread 10 according to Figure 4. Each sidewall 23, 24 of the outermost groove 20 may be tilted with respect to a straight line perpendicular to the groove opening 32. The sidewalls 23, 24 may be tilted by equal or different angles α, β in opposite directions. In Figure 5, both sidewalls 23, 24 are tilted by an angle of about 20°. However, both sidewalls 23, 24 may be tilted by between 25° and 40°, or by between 30° and 35°.

As shown in Figure 4, the outermost groove 20 preferably includes a chamfer 33 at a radially outer end of the inner sidewall 24 which is tilted with respect to the groove opening 32 by an angle γ between 10° and 45°, or between 20° and 35°. The radial height of the chamfer 33 may, for example, be between 10% and 25% of the maximum depth of the groove 20, and the width of the chamfer 33 may, for example, be between 10% and 20% of the cross-sectional width of groove opening 32. On the axially opposite side of the groove 20 (opposite to the chamfer 33), the groove may have a discontinuous edge 34 intended to contact the road when rolling. The groove bottom 25 may be tilted with respect to the groove opening 32 such as to reduce the depth of the outboard groove 20 in an axially outer direction.

The outermost groove's cross section preferably further includes portions 35, 36 joining the groove bottom 25 with the inner sidewall 24 and the outer sidewall 23. The joining portions 35, 36 may be straight, or may be curved and comprise an axially outer joining portion 35 with a radius of curvature R1, and an axially inner joining portion 36 with a radius of curvature R2 inferior to R1. Preferably, the radius of curvature R1 is at least twice the radius of curvature R2.

Figure 6 shows a schematic cross section of a middle groove 21 of the example tread 10 according to Figure 1. Each sidewall 26, 27 of the middle groove 21 is preferably be tilted with respect to a straight line perpendicular to the groove opening 37. The inner sidewall 27 may be tilted by an angle ϕ between 1° and 20°, or between 1° and 10°. The outer sidewall 26 may be tilted by an angle δ between 25° and 40°, or between 30° and 40°. In other words, the outer sidewall 26 may be more tilted than the inner sidewall 27.

Further, the middle groove 21 preferably includes a chamfer 38 at the radially outer end of the outer sidewall 26, which may be tilted with respect to the groove opening 37 by an angle θ between 10° and 45°, or between 20° and 35°, and wherein the height of the chamfer may be between 5% and 15% of the maximum depth of the middle groove 21. The cross-sectional width of the chamfer may be about 5% to 15% of the width of the groove opening. On the axially opposite side of the middle groove 21, instead of a chamfer, the middle groove may include an edge 39 intended to contact the road.

The groove bottom 28 of the middle groove 21 may also be tilted with respect to the groove opening 37 such as to reduce the depth of the middle groove in an outboard direction. Similar to the outer groove, the middle groove 21 may include portions 40, 41 joining the groove bottom 28 with the inner sidewall 27 and the outer sidewall 26. The joining portions 40, 41 may be straight, or may be curved. A curved outer joining portion 40 may have a first radius of curvature R3, and an inner joining portion 41 may have a second radius of curvature R4 superior to R3. For example, the radius of curvature R4 may be at least twice times the radius of curvature R3.

The innermost groove 22, as depicted in Figure 4, may be generally symmetric to the middle groove 21 (as shown in Figure 6) with respect to a plane perpendicular to the axis of the example tire 1. In other words, the cross section of the innermost groove 22 may substantially correspond to the mirrored cross section of the middle groove 21. In particular, the innermost groove 22 may include, from outboard to inboard, an outer sidewall 29, an outer joining portion, a groove bottom 31, an inner joining portion, an inner sidewall 30, and a chamfer with similar or equal angles, similar or equal lengths and/or radii of curvature as described with respect to the middle groove 21. In general, the terms "similar" or "about" may be understood as a variation of a value of less than 20%, or less than 5%.

The width of the middle groove 21 is preferably larger than the width of the outermost groove 20. The cross-sectional area of the middle groove 21 may correspondingly be larger than the cross-sectional area of the outermost groove 20. Such a feature may further improve the stability of the tire under cornering maneuvers. However, the width and/or the cross-sectional area of the grooves 20, 21, 22 may also be equal. Figure 7 shows a schematic cross section of a deformation of a portion of the example tire 1 of Figure 1 during an inboard cornering maneuver with respect to the example tire 1.

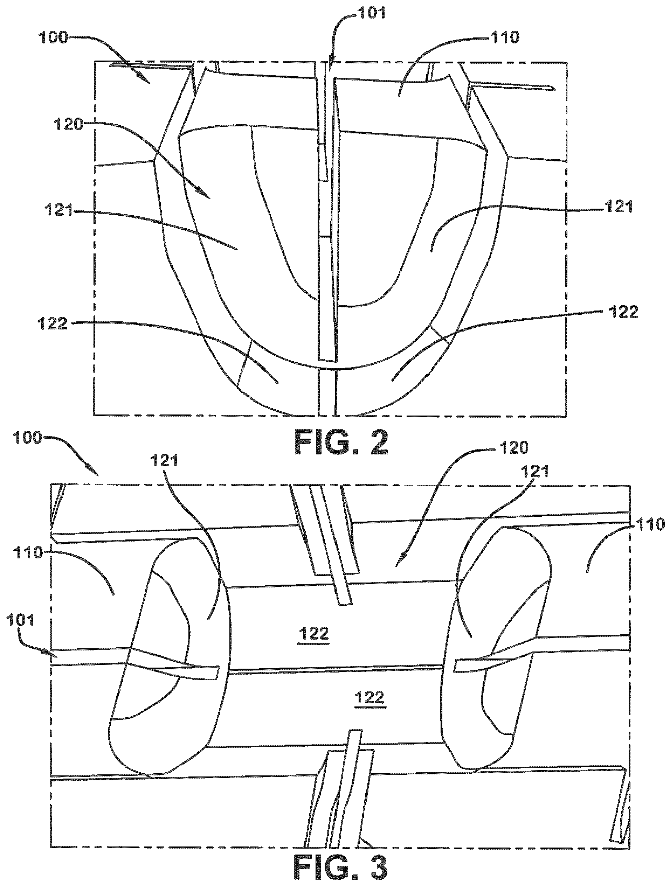

As stated above, a tread 100 in accordance with the invention has one or more circumferential grooves 101 for improving durability (Figures 1-3). As shown in Figure 1, the groove 101 include bridge structures 110 at circumferential intervals about the groove and contoured pockets 120 therebetween. Each pocket 120 have curved transition surfaces 121 separating the bridge structures 110 from curved base surfaces 122 of the pocket. The curved transition surfaces 121 have radii of curvature between 2.0 mm and 4.0 mm, or 3.0 mm. The curved base surfaces 122 have radii of curvature between 4.0 mm and 8.0 mm, or 6.0 mm.

The bridge structures 110 extend in the axial direction of the tire 10 from one lateral groove side to the other lateral groove side.

Preferably, the bridge structures 110 comprise a central radially extending slit or incision extending circumferentially along the respective bridge structure 110 and radially towards to bottom of the groove 101.

Preferably, the circumferential length of each of a respective bridge structure 110 is less than the circumferential length of each the two adjacent pocket structures 120.

Preferably, the circumferential length of each of a respective bridge structure 110) is in a range of from 80 to 40 percent of the circumferential length of each the two adjacent pocket structures 120.

In general, and in addition to the above described features, it is possible to further reinforce at least the bottom of one or more grooves in order to further improve the groove stiffness under cornering conditions and/or to reduce groove buckling. The combination of groove bottom reinforcements and the groove designs mentioned herein may further improve the groove stiffness and handling performance of the example tire 1.

## Claims

1. A tire comprising an annular tread portion (100) including a circumferentially extending groove (101) having bridge structures (110) at circumferential intervals about the groove (101) and contoured pocket structures (120) therebetween, wherein the pocket structures (120) have one or more curved transition surfaces (121) separating the bridge structures (110) from one or more curved base surfaces (122) of the pocket structures (120), the one or more curved transition surfaces (121) having a radius of curvature in a range of from 2.0 mm to 4.0 mm and the one or more curved base surfaces (122) having a radius of curvature in a range of from 4.0 mm to 8.0 mm.

2. The tire as set forth in claim 1 wherein the curved transition surfaces (121) have a radius of curvature in a range of from 2.5 mm to 3.5 mm or of 3.0 mm.

3. The tire as set forth in claim 1 or 2 wherein the curved base surfaces (122) have a radius of curvature in a range of from 5 to 7 mm or of 6.0 mm.

4. The tire as set forth in at least one of the previous claims, wherein the radius of curvature of the curved base surfaces (122) is 1.5 to 2.5 times larger than the radius of curvature of the curved transition surfaces (121).

5. The tire as set forth in at least one of the previous claims, wherein the bridge structures (110) extend in the axial direction of the tire (10) from one lateral groove side to the other lateral groove side.

6. The tire as set forth in at least one of the previous claims, wherein the bridge structures (110) comprise a central radially extending slit or incision extending circumferentially along the respective bridge structure (110) and radially towards to bottom of the groove (101).

7. The tire as set forth in at least one of the previous claims, wherein the circumferential length of each of a respective bridge structure (110) is less than the circumferential length of each the two adjacent pocket structures (120).

8. The tire as set forth in at least one of the previous claims, wherein the circumferential length of each of a respective bridge structure (110) is in a range of from 80 to 40 percent of the circumferential length of each the two adjacent pocket structures (120).

9. The tire as set forth in at least one of the previous claims, wherein curved base surfaces (122) of the pocket structures (120) are the radially innermost surfaces of the pocket structures (120).
